# EUROPEAN PATENT SPECIFICATION

(11) **EP 3 202 876 B1**
(45) Date of publication and mention of the grant of the patent: **31.07.2019**
(21) Application number: 15840668.6
(22) Date of filing: 09.09.2015
(51) Int. Cl.: C11B 3/00, B01J 8/02, C11B 3/10, A23L 5/49, A23L 33/12

(54) **FIXED BED DECOLORIZATION PROCESS FOR UNSATURATED FATTY ACID**
FESTBETT-ENTFÄRBUNGSVERFAHREN FÜR UNGESÄTTIGTE FETTSÄURE
PROCÉDÉ DE DÉCOLORATION À LIT FIXE POUR ACIDE GRAS INSATURÉ

(30) Priority: 10.09.2014 CN 201410456702
(43) Date of publication of application: 09.08.2017
(73) Proprietor: Zhejiang Medicine Co., Ltd. Xinchang Pharmaceutical Factory, Zhejiang 312500 (CN)
(72) Inventor: XIANG, Xuebing, Zhejiang 312500 (CN); XU, Xinde, Zhejiang 312500 (CN); SHAO, Bin, Zhejiang 312500 (CN); LI, Chong, Zhejiang 312500 (CN)
(74) Representative: Pallini Gervasi, Diego
(86) International application number: PCT/CN2015/000637
(87) International publication number: WO 2016/037451

(56) References cited:
- CN-A- 103 333 738
- CN-A- 103 333 738
- US-A1- 2007 260 080
- US-A1- 2007 260 080
- US-B1- 7 169 946

## Description

### FIELD OF THE INVENTION

The present invention relates to a fixed bed decolorization process for polyunsaturated fatty acid, in particular, relates to a polyunsaturated fatty acid feedstock or a polyunsaturated fatty acid solution is either passed directly through a fixed bed filler or recycled in the fixed bed filler, a colorless or light-colored polyunsaturated fatty acid product is ultimately produced. In the process, other than the color, other qualities of the polyunsaturated fatty acid remain unaffected. The process is suitable for decolorization application of one or mixture of polyunsaturated fatty acid such as fish oil (ω-3 polyunsaturated fatty acid by extraction directly), algal oil (ω-3 polyunsaturated fatty acid by fermention), linoleic acid, conjugated linoleic acid, linolenic acid, arachidonic acid etc.

### BACKGROUND OF THE INVENTION

As people pay more and more attention to their health, people starts with ingesting more and more nutritional and healthy dietary supplements, polyunsaturated fatty acid (PUFA) product plays an important role in dietary supplement.

PUFA is an important basic substance for body metabolism, especially for infant brain development. PUFA is a component of cell membrane. PUFA has mainly physiological functions such as maintaining cell membrane fluidity, promoting cholesterol esterfication, reducing cholesterol and triglycerides levels, decreasing blood viscosity, and improving blood circulation and so on. Furthermore, PUFA can also have functions such as improving human thinking and enhancing memory. However, PUFA cannot be synthesized by human body itself. PUFA must be obtained from diet.

There are various kinds of PUFA including ω-3 PUFA, ω-6 PUFA, ω-9 PUFA, and other kinds of conjugated linoleic acid, such as α-Linolenic acid (ALA), eicosapentaenoic ester (EPA), docosahexaenoic acid (DHA), docosapentaenoic acid (DPA), linoleic acid (LA), conjugated linoleic acid (CLA), γ-linolenic acid (GLA), arachidonic acid (AA) and so on. Wherein EPA and DHA representing ω-3 PUFA are known and acceptable to the public. and obviously improve human thinking and enhance memory. Their molecular structures of polyunsaturated fatty acids are as follows.

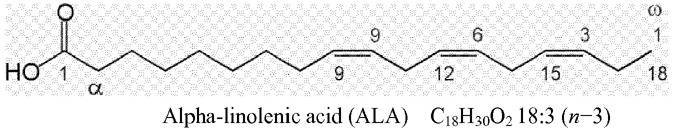

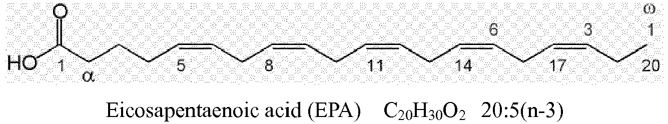

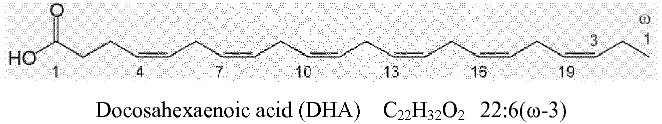

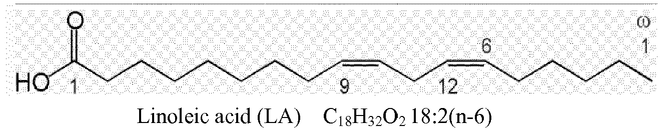

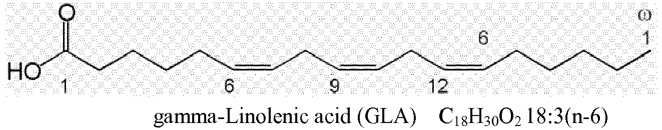

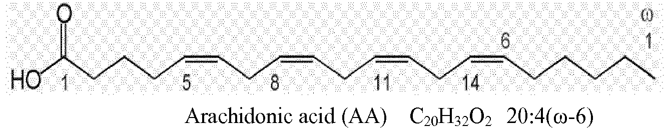

Polyunsaturated fatty acid mainly derives from algae extract and marine oil, one of important sources comes from fish oil. Due to PUFA feedstock derives from extract, it contains colored impurity such as pigment. Some impurities are harmful to human body. Product standard of PUFA is colorless or light yellow transparent liquid. Therefore, industrial preparation process of polyunsaturated fatty acid contains a decolorization process.

At present, a decolorization process in industry use decolorizers including activated carbon, diatomite, carclazyte, silica gel or ion exchange resin etc. A kettle type mixing decoloring process is widely used. That is, PUFA and decolorizer are mixed together under certain condition, and then directly filtered and recovered after mixing to finally obtain PUFA product. The process has the following disadvantages: 1) feedstocks or intermediates easily contact with air or oxygen due to open operation of partial process, and then it would result in product oxidized and would reduce product quality; 2) industrial design and large-scale production have some difficulty because of intermittent operation; 3) decolorizer is difficult to be recovered; 4) decolorizer is difficult to be treated; 5) decolorize along with some PUFA is difficult to recycle and produce high loss and lower yield; 6) operation process is complex; 7) process would bring about a serious of environmental pollution and safety problems.

Currently some prior documents such as Chinese Patent No. CN102994236, CN1101935, CN103525564, CN1283392, CN103540415 disclose a decolorization process of polyunsaturated fatty acid by using 0.1∼5% activated carclazyte as decolorizer. Chinese Patent No. CN103725403, CN1263145, CN101940240 disclose a decolorization process of polyunsaturated fatty acid by using active carbon as decolorizer. Chinese Patent No. CN1769409 uses diatomite as decolorizer. Chinese Patent No.CN101297708 uses an ion exchange resin as decolorizer. Wherein decolorization process is conducted by kettle type mixing under certain condition, and then directly filter after decolorization to obatin PUFA. Thees processes have some effects on decolorization. However, it would be difficult to transfer and feed because the filtered carclazyte, activated carbon and diatomite have some viscosity, and then cannot recycle directly. Besides, cleaning operation is too complex. Thus, decolorizer is generally directly discarded rather than recycled.

Due to intermittent caldron type mixing operation and partial opening operation of the above mentioned processes, polyunsaturated fatty acids easily contact with air or oxygen and make product oxidized and consequently reduce product quality. In the meanwhile, intermittent caldron type mixing operation would influence industrial scale production, and operation process would relatively complex. It also would not be convenient to monitor quality of product.

Moreover, decolorizers would absorb a certain amount of polyunsaturated fatty acid after using up decolorizers in intermittent caldron type mixing process. It would make polyunsaturated fatty acid difficult recovery. Consenquently it would result in loss of polyunsaturated fatty acid and influence yield of product.

Besides, these decolorizers in opening operation process may cause serious of environmental pollution, and activated carbon in opening operation process is flammable, and then would produce big security risks.

In general, the above mentioned processes have serious of disadvantages difficult to overcome, and consequently these processes could not be used for large-scale production.

How to choose proper implement method in decolorization process is also studying besides choosing decolorizers. Currently most of processes use intermittent caldron type mixing operation to carry out decoloring. But it could not overcome or improve the above mentioned deficiencies. A fixed bed technology has been used in other industrial applications such as used in the field of production separation, a good separation would be achieved comparing with traditional technology. US2007260080 discloses a method for producing a decolorized plant oil, the method comprising passing a composition comprising plant oil and a non-polar solvent through a bed or column of a cationic ion exchange resin, removing the non-polar solvent from the decolorized oil composition and regenerating the ion exchange resin, wherein the non-polar organic solvent is selected from the group consisting of pentane, hexane, heptane, octane, petroleum ether, isomers of any thereof, and mixtures thereof.

CN103333738 discloses a physical method for preparing vegetable oil, including passing unrefined oil through and filling a fixed bed having a degumming layer and a decolorization layer so as to carry out adsorption refining; the temperature is between 35°C and 75°C, and the decolorization layer is comprised of bentonite, activated carbon, zeolite and diatomaceous earth.

US7169946 discloses a fixed bed decolorization process for fatty acid such as polyunsaturated fatty acid with a fixed-bed filler such as activated carbon.

A fixed bed device is to fix some special fillers in fixed bed device, for example, liquid and gas may directly pass through fillers or circulate in fillers of fixed bed device, and make materials absorbed or separated. These processes have advantages of high efficiency, less environmental pollution and saving energy etc.

### SUMMARY OF THE INVENTION

The present invention relates to a decolorization process, in particular, relates to use a filler of a fixed bed to decolorate for polyunsaturated fatty acid feedstock or a polyunsaturated fatty acid solution, that is, a polyunsaturated fatty acid feedstock or a polyunsaturated fatty acid solution is either passed directly through a fixed bed filler or recycled in the fixed bed filler, to achieve purposes of decolorization and then obtain a colorless or light-colored polyunsaturated fatty acid product.

According to the fixed bed decolorization process of the present invention, the fixed bed decolorization process comprising: 1) filling a fixed-bed filler in a decolorization fixed bed, and rinsing the decolorization fixed bed with a dissolving solvent; and then rinsing the decolorization fixed bed with a polyunsaturated fatty acid feedstock or a polyunsaturated fatty acid solution for 1∼2 times to obtain a stable decolorization fixed bed; wherein the polyunsaturated fatty acid solution includes the polyunsaturated fatty acid feedstock and the dissolving solvent; 2) mixing the polyunsaturated fatty acid feedstock or the polyunsaturated fatty acid solution and the dissolving solvent together to obtain a mixture; and 3) passing the mixture through an inlet of the decolorization fixed bed to feed, passing the mixture through an outlet of the decolorization fixed bed to discharge, a temperature of the decolorization fixed-bed is 0°C∼150°C, to obtain a decolorized solution; and then recycle solvent from the decolorized solution under reduced pressures or normal pressures, to obtain a decolorized polyunsaturated fatty acid product; wherein, the polyunsaturated fatty acid feedstock is selected from the group consisting of free radical type polyunsaturated fatty acid, methyl ester type polyunsaturated fatty acid, ethyl ester type polyunsaturated fatty acid and glyceride type unsaturated fatty acid; the fixed-bed filler is selected from the group consisting of carclazyte, silica gel; the dissolving solvent is selected from the group consisting of esters solvent, alcoholes solvent, ketones solvent.

The polyunsaturated fatty acid feedstock of the present invention comprises free radical type polyunsaturated fatty acid, methyl ester type polyunsaturated fatty acid, ethyl ester type polyunsaturated fatty acid and glyceride type unsaturated fatty acid. Wherein the total content of the polyunsaturated fatty acid in the polyunsaturated fatty acid feedstock is 10∼100% by weight.

The polyunsaturated fatty acid of the present invention comprises one or more types of fish oil (ω-3 polyunsaturated fatty acid by extraction directly), algal oil (ω-3 polyunsaturated fatty acid by fermention), linoleic acid, conjugated linoleic acid, linolenic acid, and arachidonic acid or a mixture thereof.

The carclazyte is various of carclazyte. The silica gel comprises one or more kinds of macroporous silica gel, silochrom, B-type silica gel, and pore silica gel or a mixture thereof.

The feeding way of the polyunsaturated fatty acid feedstock in the decolorization fixed bed of the prsent invention includes upper feeding, middle feeding and bottom feeding; and the discharging way of the polyunsaturated fatty acid feedstock in the decolorization fixed bed includes upper discharging, middle discharging and bottom discharging. Wherein the diameter ratio of the decolorization fixed bed is 1:1∼1:20.

The dissolving solvent of the polyunsaturated fatty acid solution comprises one or more kinds of esters solvent, alcoholes solvent, ketones solvent. Wherein the esters solvent comprises one or more kinds of methyl formate, ethyl formate, propyl formate, isopropyl formate, butyl formate, isobutyl formate, amyl formate, isoamyl formate, methyl acetate, ethyl acetate, propyl acetate, butyl acetate, isobutyl acetate, amyl acetate, isoamyl acetate, methyl propionate, ethyl propionate, propyl propionate, butyl propionate, Isobutyl propionate, amyl propionate, isoamyl propionate, methyl butyrate, ethyl butyrate, propyl butyrate, butyl butyrate, isobutyl butyrate, amyl butyrate, isoamyl butyrate, methyl isobutyrate, ethyl isobutyrate, propyl isobutyrate, butyl isobutyrate, isobutyl isobutyrate, amyl isobutyrate, isoamyl isobutyrate, methyl valerate, ethyl valerate, propyl valerate, butyl valerate, isobutyl valerate, amyl valerate, isoamyl valerate, methyl isovalerate, ethyl isovalerate, propyl isovalerate, butyl isovalerate, isobutyl isovalerate, amyl isovalerate, isoamyl isovalerate or a mixture thereof. The ketones solvent comprises one or more kinds of acetone, butanone, methyl acetone, 2-pentanone, 3-pentanone, 3-methylbutanone or a mixture thereof. The alcohols solvent comprises one or more kinds of methanol, alcohol, propyl alcohol, isopropanol, butanol, isobutanol, sec-butyl alcohol, tertiary butanol, pentanol, 2-methyl-1-butanol, isopentyl alcohol, sec-amyl alcohol, 3-pentanol, tert-amyl alcohol, 3-methyl-2-butanol, neopentyl alcohol or a mixture thereof.

The present invention can be decolorized by using a solution. On the one hand, it would reduce damage as oxidation by diluting related concentration of the polyunsaturated fatty acid feedstock. On the other hand, it would be benefit for improving velocity and uniform distribution of the fixed bed filler and controlling the process.

The weight of the dissolving solvent in the polyunsaturated fatty acid solution of the present invention is 0.1∼10 times as large as the weight of the polyunsaturated fatty acid feedstock.

The controlling temperature of the process of the present invention is 0-150°C. It not only can improve the process conditions to obtain the best decolorizing effects but also improve viscosity of the filler and flow velocity of the filler in the fixed bed.

The fixed-bed filler of the present invetion can be repeatedly used. namely the decolorizing process can be carried out repeatedly, and has less influence on the decolorizing effect.

After decolorizing getting worse or finshing decolorizing of the present invetion, the fixed-bed can be rinsed with rinsing solvent and then is repeatedly used. The rinsing method may use the same direction or the opposite direction as the flow direction of the filler of the decolorization process, in order to achieve the best rinsing effect.

The rinsing solvent of the fixed bed filler of the present invention may use one or more kinds of solvents. The rinsing solvent may be water or the rinsing solvent of dissolving the polyunsaturated fatty acid of the decolorization process. The rinsing solvent includes water or the dissolving solvent. The dissolving solvent of the polyunsaturated fatty acid solution comprises one or more kinds of esters solvent, alcoholes solvent, ketones solvent. Wherein the esters solvent comprises one or more kinds of methyl formate, ethyl formate, propyl formate, isopropyl formate, butyl formate, isobutyl formate, amyl formate, isoamyl formate, methyl acetate, ethyl acetate, propyl acetate, butyl acetate, isobutyl acetate, amyl acetate, isoamyl acetate, methyl propionate, ethyl propionate, propyl propionate, butyl propionate, Isobutyl propionate, amyl propionate, isoamyl propionate, methyl butyrate, ethyl butyrate, propyl butyrate, butyl butyrate, isobutyl butyrate, amyl butyrate, isoamyl butyrate, methyl isobutyrate, ethyl isobutyrate, propyl isobutyrate, butyl isobutyrate, isobutyl isobutyrate, amyl isobutyrate, isoamyl isobutyrate, methyl valerate, ethyl valerate, propyl valerate, butyl valerate, isobutyl valerate, amyl valerate, isoamyl valerate, methyl isovalerate, ethyl isovalerate, propyl isovalerate, butyl isovalerate, isobutyl isovalerate, amyl isovalerate, isoamyl isovalerate or a mixture thereof. The ketones solvent comprises one or more kinds of acetone, butanone, methyl acetone, 2-pentanone, 3-pentanone, 3-Methylbutanone or a mixture thereof. The alcohols solvent comprises one or more kinds of methanol, alcohol, propyl alcohol, isopropanol, butanol, isobutanol, sec-butyl alcohol, tertiary butanol, pentanol, 2-methyl-1-butanol, isopentyl alcohol, sec-amyl alcohol, 3-Pentanol, tert-amyl alcohol, 3-methyl-2-butanol, neopentyl alcohol or a mixture thereof.

After appropriate treating decolorization product, a colorless or light yellow polyunsaturated fatty acid product is obtained. Other than the color, other qualities of the polyunsaturated fatty acid remain unaffected. Especially, the process can also remove heavy metals, dioxin, benzopyrene and other trace species in the product.

Solvent may be recovered under reduced pressure or normal pressure in the fixed bed decolorization process of the present invention to obtain reused solvents and the polyunsaturated fatty acid, after decolorization of the polyunsaturated fatty acid solution.

The process of the present invetion ensures product quality, because the precess uses totally enclosed operation, no fillers contact with air or oxygen and no product oxidation is occured, and only need controlling velocity of the filler and monitoring the product quality in the process.

Less waste is finally produced in the process. And no environmental pollution and security risk is occurred So the process is suitable for larger scale production.

The decolorizers used in the fixed-bed for the polyunsaturated fatty acid of the present invention adopt a fixed bed mode, the mode has the following advantages:
1) The decolorization process allows continuous operation or intermittent operation. It could simplify the decolorization process and the decolorization process could be very stable.
2) The decolorization process eliminates air or oxygen influences on products because the decolorization process uses continuous enclosed operation. It could improve quality of product to a certain degree. And the decolorization process overcomes disadvantages of the decolorizers attached in the product in the kettle type mixing intermittent operation because the decolorization process uses continuous enclosed operation. The decolorization process could reduce or eliminats loss of the product and increase yield of the product.
3)The polyunsaturated fatty acid raw materal or polyunsaturated fatty acid solution directly passes through the fixed bed or circulate in the fixed bed, wherein the feeding way includes upper feeding, middle feeding, bottom feeding or combined feeding, and the discharging way includes upper discharging, middle discharging and bottom discharging. It could make polyunsaturated fatty acid or its solution greatly and uniformly contact with the decolorizer, to obtain the best decolorization effects.
4) The decolorizer in the enclosed fixed bed could be used circularly. It could eliminate environment pollution and security risk.
5) In comparsion with the kettle type intermittent decolorizing operation, the decolorizer of the present invention could increase usage amount for each time . So the quality of the obtained product could improved highly.
6) The fixed bed decolorization process of the present invention could be monitored and detected online at any time. The operation is very simple and convenient. The process could ensure the stability of product quality.
7) When the effect of decolorization is degraded or lost, the decolorizer could be eluted with eluents. The eluting operation is substantially the same as that of the decolorization process, that is using downstream flow or upstream flow. The procedure is very simple, the decolorizer can be used immediately after eluting.

The present invention provides a fixed bed decolorization process for an polyunsaturated fatty acid by using a decolorizer as fillers. A polyunsaturated fatty acid or a polyunsaturated fatty acid solution is either passed directly through a fixed bed filler or recycled in fillers of the fixed bed, in order to achieve the purpose of decolorization. The decolorization process allows continuous operation or intermittent operation. It could simplify the decolorization process and the decolorization process could be very stable. It could improve product quality to a certain degree. The decolorization process could reduce or eliminate loss of product and increase yield of product. Using a simple or combination feeding mode could make polyunsaturated fatty acid or its solution greatly and uniformly contact with the decolorizer, to achieve the best decolorization effects. It could eliminate environmental pollution and security risk. When decolorization effect of decolorizer is degraded or lost, the decolorizer could be washed with eluents. The eluting operation is very simple and convenient, the decolorizer can immediately be used after eluting.

### BRIEF DESCRIPTION OF FIGURES

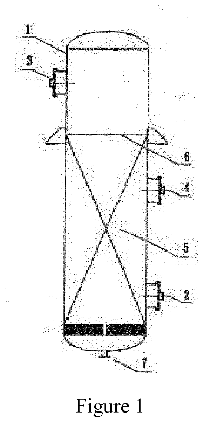

Figure 1 shows a fixed bed decolorization process for polyunsaturated fatty acid.

### DETAILED DESCRIPTION AND PREFERRED EMBODIMENTS THEREOF

Hereafter, the present invention will be described specifically with reference to the examples. The examples are given only for illustration of the technical solution of the present invention and should not be construed to limit the present invention.

### Example 1 (not according to the present invention)

To select a decolorization fixed bed 1, wherein the diameter of the decolorization fixed-bed is 0.1m, the height is 0.5m (the ratio of diameter to height of the decolorization fixed bed is 1:5). To fill a powder type activated carbon in the decolorization fixed-bed, and firstly rinse the decolorization fixed bed with n-hexane, and then rinse the decolorization fixed bed with a free type fish oil feedstock once or twice, to obtain a stable decolorization fixed-bed device, as shown in Figure 1.

To mix 500g of a free type fish oil feedstock (EPA 17.6%, DHA 11.7%, the total content of a free type polyunsaturated fatty acid is 42.1%, with orange-red color) with 500g of n-hexane, to obtain an homogenous solution with light orange-red color .

The homogenous solution including a free type fish oil feedstock and n-hexane for decolorization passes through an upper feeding inlet 3 into a bottom discharging outlet 2 (upper-lower path) in the fixed bed. These feedstock directly passes through the fixed-bed without circulation, the temperature of the fixed-bed is at 30 °C, the decolorizing time is 0.5h. After decolorizing, a free type fish oil and n-hexane solution with light yellow color is recovered under reduced pressure, to obtain 496g of free type fish oil product with light yellow color.

After finishing the decolorization, all of feedstocks are released from a bottom drain hole 7. And then a rinsing solvent n-hexane passes through a bottom inlet 2, middle inlet 5, and then passes through a partition 6, to discharge from a upper outlet 3. Rinsing a filler 5 of the fixed bed and then all of solvents are released from a bottom drain hole 7.

Determination of a free type fish oil product: EPA 17.3%, DHA 11.5%, the total content of a free type polyunsaturated fatty acid is 42.0% with light yellow color, the yield is 99.0%.

### Comparsion Example 2

To mix 500g of a free type fish oil feedstock (EPA17.6%, DHA11.7%, the total content of a free type polyunsaturated fatty acid is 42.1% with orange-red color) with 500g of n-hexane in a reaction flask, to obtain a homogenous solution with light orange-red color.

To add 25g of powder type activated carbon to the reaction flask, and then is decolorized under stirring at 30□ for 1.0h; afterwards, to filtrate and remove the activated carbon after finishing decolorization, to obtain a free type fish oil and n-hexane solution with light yellow color, and then remove solvent under reduced pressure to obtain 459g of product of free type fish oil with light yellow color.

Determination of a free type fish oil product: EPA17.1%, DHA 11.6%, the total content of the free type polyunsaturated fatty acid is 41.8% with light yellow color, the yield is 91.1%.

It could be shown from a comparison betwwen the Example 1 of the present invention and the Comparsion Example 2 that the Example 1 of the present invention uses an activated carbon as a filler of the fixed bed for decolorization at 30□ by a solution including n-hexane and a free type fish oil containing polyunsaturated fatty acid, to obtain a free type fish oil product with quite light color. It could also be shown the decolorization process of the present invention has better decolorization effects, the yield is 99.0%. Other than the color, other qualities of the polyunsaturated fatty acid remain unaffected, and at the same time, the activated carbon can be directly reused.

The Comparsion Example 2 uses a common kettle type mixing for decolorization under the same process condition, in particular, uses 5% activated carbon at 30□ for decolorization by a solution including n-hexane and a free type fish oil containing polyunsaturated fatty acid, to obtain a free type fish oil product with light color. It could also be shown the decolorization process of the Comparsion Example 2 has bad effects, the yield is 91.1%. Besides it would be difficult to obtain activated carbon to be reused because of high stickiness of received activated carbon.

In comparsion with the decolorization process and experimental result of the present invention and the Comparsion Example, it could be seen from it that the decolorization process of the present invention has many advantages such as simple process, better decolorizing effects, higher yield, lower cost and no environmental pollution, and consequently the decolorization process of present invention has feasibility for industrial scale production.

### Examples 3∼15 (Examples 1 - 8 and 13 - 15 not according to the present invention)

Please refer to various of implement objects and their parameters of Table 1 of Examples 3∼15 as follows.

**Table 1**

| examples | **State of fixed-bed** | | | **State of feedstock/solution** | | | | **Feed-in Path** | | **Product** | | |
|---|---|---|---|---|---|---|---|---|---|---|---|---|
| | ratio of diameter to height | filler | T/°C | type of polyunsaturated fatty acid feedstock | total content of polyunsaturated fatty acid % | color | solvent g/g | feed-in path | decolorizi ng way | color | total content of polyunsaturate d fatty acid % | yield /% |
| 3 | 1:1 | Powder type activated carbon | 0 | glyceride type fish oil | 59.8 | orange-red | -- | upper-lower path | directly pass | Light yellow | 59.4 | 98.9 |
| 4 | 1:1 | Particle type activated carbon | 20 | Ethyl ester linoleic acid | 78.3 | Light orange-red | n-hexane 0.5:1 | lower-upper path | cycle | Light yellow | 78.2 | 99.2 |
| 5 | 1:2 | Amorphous particle type activated carbon | 30 | Ethyl ester conjugated linoleic acid | 46.7 | orange-red | Ethanol 4:1 | upper/middle-lower path | cycle | Light yellow | 46.5 | 98.8 |
| 6 | 1:4 | Cylinder-shaped activated carbon | 30 | Ethyl ester fish oil | 46.9 | Light orange-red | -- | lower-upper path | cycle | Light yellow | 46.7 | 98.7 |
| 7 | 1:6 | Spherical-shaped activated carbon | 30 | Free type algal oil | 42.1 | orange-red | -- | upper-lower path | cycle | Light yellow | 42.2 | 99.1 |
| 8 | 1:8 | Activated diatomite | 40 | glyceride type algal oil | 92.4 | Light orange-red | Ethyl formate 2:1 | middle/lower - upper path | directly pass | Light yellow | 92.6 | 98.7 |
| 9 | 1:10 | Activated carclazyte | 50 | Methyl ester linoleic acid | 11.2 | orange-red | Propyl formate 8:1 | lower-upper path | directly pass | Light yellow | 11.6 | 99.2 |
| 10 | 1:20 | Macroporous silica gel | 150 | Free type conjugated linoleic acid | 27.8 | Light orange-red | Butyl isovalerate 6:1 | upper-lower path | cycle | Light yellow | 27.9 | 99.1 |
| 11 | 1:5 | silochrom | 100 | Free type arachidonic acid | 53.6 | Light orange-red | Isobutyl acetate 1:1 | upper/middle-lower path | cycle | Light yellow | 53.8 | 98.8 |
| 12 | 1:4 | pore silica gel | 70 | Free type linolenic acid | 68.5 | orange-red | Ethyl acetate 10:1 | lower-upper path | cycle | Light yellow | 68.4 | 99.2 |
| 13 | 1:5 | Weak acidic ion exchange resin | 30 | glyceride type linolenic acid | 68.2 | Light orange-red | Methanol 3:1 | middle/lower - upper path | cycle | Light yellow | 68.0 | 99.1 |
| 14 | 1:8 | Neutral ion exchange resin | 60 | Ethyl ester linolenic acid | 36.7 | orange-red | ether 6:1 | middle/lower - upper path | cycle | Light yellow | 36.5 | 98.7 |
| 15 | 1:9 | Weak basic ion exchange resin | 20 | Ethyl ester arachidonic acid | 46.7 | Light orange-red | Butanone 5:1 | lower-upper path | cycle | Light yellow | 46.4 | 99.0 |

### Example 16-20 (example of reused decolorizer) (not according to the present invention)

To select the fix bed of Example 1 (wherein the diameter of the fix bed is 0.1 meter, the heigh is 0.5 m, the ratio of diameter to heigh is 1:5, a powdered type activated carbon filler and 30°C of temperature), the fix bed is reused for decolorization, as shown in Table 2. Some implement objects and their parameters of Examples 16∼20 are listed in Table 2.

**Table 2**

| Examples | State of feedstock/solution | | | | Feed-in path | | Product | | |
|---|---|---|---|---|---|---|---|---|---|
| | Type of polyunsaturated fatty acid feedstock | Total content of polyunsaturated fatty acid % | Color | Solvent | Feed-in path | Decolorizing way | Color | Total content of polyunsaturated fatty acid % | Yield/% |
| 16 | glyceride type fish oil | 59.8 | orange red | -- | upper-lower path | directly pass | light yellow | 59.7 | 99.2 |
| 17 | ethyl ester linoleic acid | 78.3 | orange red | n-hexane 3:1 | upper-lower path | directly pass | light yellow | 78.2 | 99.0 |
| 18 | ethyl ester conjugated linoleic acid | 46.7 | orange red | ethanol 4:1 | upper/middle-lower path | directly pass | light yellow | 46.6 | 98.9 |
| 19 | free type algal oil | 42.1 | orange red | butanone 6:1 | upper-lower path | directly pass | light yellow | 41.7 | 98.6 |
| 20 | glyceride type linolenic acid | 68.2 | orange red | ether 4:1 | upper-lower path | directly pass | light yellow | 68.2 | 98.5 |

### Example 21∼22 (Example of reused fixed bed after rinsing) (not according to the present invention)

To select the fix bed of Examples **21∼22** (wherein the diameter of the fix bed is 0.1 meter, the heigh is 0.5 m, the ratio of diameter to heigh is 1:5, the filler is powdered type activated carbon and the temperature is 30°C). After the fix bed is reused for decolorization, n-hexane is used for rinsing the fixed bed. After finsihing rinsing, the fixed bed is reused for decolorization. Some implement objects and their parameters of Examples 3∼15 are listed in Tables 3.

**Table 3**

| Examples | State of feedstock/solution | | | | Feed-in path | | Product | | |
|---|---|---|---|---|---|---|---|---|---|
| | Type of polyunsaturated fatty acid feedstock | Total content of polyunsaturated fatty acid % | Color | Solvent | Feed-in path | Decolorizing way | color | Total content of polyunsaturated fatty acid % | yield % |
| 21 | ethyl ester fish oil | 46.9 | orange red | n-hexane 3:1 | upper-lower path | directly pass | light yellow | 46.7 | 98.8 |
| 22 | Cylglycerol linolenic acid | 68.2 | orange red | n-hexane 2:1 | upper-lower path | directly pass | light yellow | 68.1 | 99.1 |

Although the present invention has been described in connection with the above embodiments, it should be understood that the present invention is not limited to such preferred embodiments and procedures set forth above. The embodiments and procedures were chosen and described in order to best explain the principles of the invention and its practical application, to thereby enable others skilled in the art to best utilize the invention. The intention is intended to cover all alternative constructions and equivalents falling within the scope of the invention as defined only by the appended claims.

Although the present invention has been described in connection with the above embodiments, it should be understood that the present invention is not limited to such preferred embodiments and procedures set forth above. The embodiments and procedures were chosen and described in order to best explain the principles of the invention and its practical application, to thereby enable others skilled in the art to best utilize the invention. It will be apparent to those skilled in the art that various substitution, modifications and changes may be thereto without departing from the scope and spirit of the invention. Therefore, the intention is intended to cover all alternative constructions and equivalents falling within the spirit and scope of the invention as defined only by the appended claims and equivalents thereto.

## Claims

1. A fixed bed decolorization process for polyunsaturated fatty acid, the fixed bed decolorization process comprising:
1) filling a fixed-bed filler in a decolorization fixed bed, and rinsing the decolorization fixed bed with a dissolving solvent; and then rinsing the decolorization fixed bed with a polyunsaturated fatty acid feedstock or a polyunsaturated fatty acid solution for 1-2 times to obtain a stable decolorization fixed bed; wherein the polyunsaturated fatty acid solution includes the polyunsaturated fatty acid feedstock and the dissolving solvent;
2) mixing the polyunsaturated fatty acid feedstock or the polyunsaturated fatty acid solution with the dissolving solvent together to obtain a mixture; and
3) passing the mixture through an inlet of the decolorization fixed bed to feed, passing the mixture through an outlet of the decolorization fixed bed to discharge, a temperature of the decolorization fixed-bed is 0°C∼150°C, to obtain a decolorized solution; and then recycle solvent from the decolorized solution under reduced pressures or normal pressures, to obtain a decolorized polyunsaturated fatty acid product;
wherein the polyunsaturated fatty acid feedstock is selected from the group consisting of free type polyunsaturated fatty acid, methyl ester type polyunsaturated fatty acid, ethyl ester type polyunsaturated fatty acid and glyceride type unsaturated fatty acid;
the fixed-bed filler is selected from the group consisting of carclazyte, and silica gel;
the dissolving solvent is selected from the group consisting of esters solvent, alcoholes solvent and ketones solvent.

2. The fixed bed decolorization process according to claim 1, wherein the polyunsaturated fatty acid is selected from the group consisting of fish oil, algal oil, linoleic acid, conjugated linoleic acid, linolenic acid and arachidonic acid.

3. The fixed bed decolorization process according to claim 2, wherein the total content of the polyunsaturated fatty acid in the polyunsaturated fatty acid feedstock is 10∼100% by weight.

4. The fixed bed decolorization process according to claim 1, wherein the silica gel is selected from the group consisting of macroporous silica gel, silochrom, B-type silica gel and pore silica gel.

5. The fixed bed decolorization process according to claim 1, wherein the feeding way of the polyunsaturated fatty acid feedstock in the decolorization fixed bed includes upper feeding, middle feeding and bottom feeding; and the discharging way of the polyunsaturated fatty acid feedstock in the decolorization fixed bed includes upper discharging, middle discharging and bottom discharging.

6. The fixed bed decolorization process according to claim 5, wherein a ratio of diameter to height of the decolorization fixed bed is 1:1∼1:20.

7. The fixed bed decolorization process according to claim 1, wherein the esters solvent is selected from the group consisting of methyl formate, ethyl formate, propyl formate, isopropyl formate, butyl formate, isobutyl formate, amyl formate, isoamyl formate, methyl acetate, ethyl acetate, propyl acetate, butyl acetate, isobutyl acetate, amyl acetate, isoamyl acetate, methyl propionate, ethyl propionate, propyl propionate, butyl propionate, isobutyl propionate, amyl propionate, isoamyl propionate, methyl butyrate, ethyl butyrate, propyl butyrate, butyl butyrate, isobutyl butyrate, amyl butyrate, isoamyl butyrate, methyl isobutyrate, ethyl isobutyrate, propyl isobutyrate, butyl isobutyrate, isobutyl isobutyrate, amyl isobutyrate, isoamyl isobutyrate, methyl valerate, ethyl valerate, propyl valerate, butyl valerate, isobutyl valerate, amyl valerate, isoamyl valerate, methyl isovalerate, ethyl isovalerate, propyl isovalerate, butyl isovalerate, isobutyl isovalerate, amyl isovalerate, isoamyl isovalerate; the ketones solvent is selected from the group consisting of acetone, butanone, methyl acetone, 2-pentanone, 3-pentanone, 3-methylbutanone; the alcohols solvent is selected from the group consisting of methanol, alcohol, propyl alcohol, isopropanol, butanol, isobutanol, sec-butyl alcohol, tertiary butanol, pentanol, 2-methyl-1-butanol, isopentyl alcohol, sec-amyl alcohol, 3-Pentanol, tert-amyl alcohol, 3-methyl-2-butanol, neopentyl alcohol.

8. The fixed bed decolorization process according to claim 1, wherein the weight of the dissolving solvent in the polyunsaturated fatty acid solution is 0.1-10 times as large as the weight of the polyunsaturated fatty acid feedstock.

9. The fixed bed decolorization process according to any one of claims 1-8, wherein the filler of the decolorization fixed-bed can be repeatedly used; the decolorization fixed-bed can be rinsed and then is repeatedly used after decolorizing getting worse or finshing decolorizing.

10. The fixed bed decolorization process according to any one of claims 1-8, wherein the fixed-bed filler can be repeatedly used; after decolorizing getting worse or finshing decolorizing, the fixed-bed can be rinsed with a rinsing solvent and then is repeatedly used.

11. The fixed bed decolorization process according to claim 10, wherein the rinsing solvent is water and the dissolving solvent.

## Patentansprüche

1. Festbett-Entfärbungsverfahren für mehrfach ungesättigte Fettsäure, wobei das Festbett-Entfärbungsverfahren Folgendes umfasst:
1) Füllen eines Festbett-Füllstoffs in ein Entfärbungsfestbett und Spülen des Entfärbungsfestbetts mit einem auflösenden Lösungsmittel und dann ein- bis zweimal Spülen des Entfärbungsfestbetts mit einem Zulauf einer mehrfach ungesättigten Fettsäure oder einer Lösung einer mehrfach ungesättigten Fettsäure, um ein stabiles Entfärbungsfestbett zu erhalten; wobei die Lösung der mehrfach ungesättigten Fettsäure den Zulauf der mehrfach ungesättigten Fettsäure und das auflösende Lösungsmittel einschließt;
2) Vermischen des Zulaufs der mehrfach ungesättigten Fettsäure oder der Lösung der mehrfach ungesättigten Fettsäure mit dem auflösenden Lösungsmittel, um eine Mischung zu erhalten; und
3) Durchführen der Mischung durch einen Einlass des Entfärbungsfestbetts zum Zuführen, Durchführen der Mischung durch einen Auslass des Entfärbungsfestbetts zum Ablassen, wobei eine Temperatur des Entfärbungsfestbetts 0 °C bis 150 °C beträgt, um eine entfärbte Lösung zu enthalten; und dann Rückführen des Lösungsmittels aus der entfärbten Lösung unter vermindertem Druck oder normalem Druck, um ein entfärbtes Produkt der mehrfach ungesättigten Fettsäure zu erhalten;
wobei der Zulauf der mehrfach ungesättigten Fettsäure aus der Gruppe bestehend aus mehrfach ungesättigter freier Fettsäure, Methylester der mehrfach ungesättigten Fettsäure, Ethylester der mehrfach ungesättigten Fettsäure und einem Glycerid der ungesättigten Fettsäure ausgewählt ist;
wobei der Festbett-Füllstoff aus der Gruppe bestehend aus Carclazyt und Kieselgel ausgewählt ist;
wobei das auflösende Lösungsmittel aus der Gruppe bestehend aus Esterlösungsmitteln, Alkohollösungsmitteln und Ketonlösungsmitteln ausgewählt ist.

2. Festbett-Entfärbungsverfahren gemäß Anspruch 1, wobei die mehrfach ungesättigte Fettsäure aus der Gruppe bestehend aus Fischöl, Algenöl, Linolsäure, Linolensäure und Arachidonsäure ausgewählt ist.

3. Festbett-Entfärbungsverfahren gemäß Anspruch 2, wobei die Gesamtmenge der mehrfach ungesättigten Fettsäure in dem Zulauf der mehrfach ungesättigten Fettsäure 10-100 Gew.-% beträgt.

4. Festbett-Entfärbungsverfahren gemäß Anspruch 1, wobei das Kieselgel aus der Gruppe bestehend aus makroporösem Kieselgel, Silochrom, Kieselgel Typ B und porösem Kieselgel ausgewählt ist.

5. Festbett-Entfärbungsverfahren gemäß Anspruch 1, wobei der Zuführungsweg für den Zulauf der mehrfach ungesättigten Fettsäure in dem Entfärbungsfestbett eine obere Zuführung, eine mittlere Zuführung und eine untere Zuführung einschließt; und der Ablassweg für den Zulauf der mehrfach ungesättigten Fettsäure in dem Entfärbungsfestbett einen oberen Ablass, einen mittleren Ablass und einen unteren Ablass einschließt.

6. Festbett-Entfärbungsverfahren gemäß Anspruch 5, wobei ein Verhältnis von Durchmesser zu Höhe des Entfärbungsfestbetts 1:1 bis 1:20 beträgt.

7. Wirbelbett-Entfärbungsverfahren gemäß Anspruch 1, wobei das Esterlösungsmittel aus der Gruppe bestehend aus Methylformiat, Ethylformiat, Propylformiat, Isopropylformiat, Butylformiat, Isobutylformiat, Amylformiat, Isoamylformiat, Methylacetat, Ethylacetat, Propylacetat, Butylacetat, Isobutylacetat, Amylacetat, Isoamylacetat, Methylpropionat, Ethylpropionat, Propylpropionat, Butylpropionat, Isobutylpropionat, Amylpropionat, Isoamylpropionat, Methylbutyrat, Ethylbutyrat, Propylbutyrat, Butylbutyrat, Isobutylbutyrat, Amylbutyrat, Isoamylbutyrat, Methylisobutyrat, Ethylisobutyrat, Propylisobutyrat, Butylisobutyrat, Isobutylisobutyrat, Amylisobutyrat, Isoamylisobutyrat, Methylvalerat, Ethylvalerat, Propylvalerat, Butylvalerat, Isobutylvalerat, Amylvalerat, Isoamylvalerat, Methylisovalerat, Ethylisovalerat, Propylisovalerat, Butylisovalerat, Isobutylisovalerat, Amylisovalerat, Isoamylisovalerat ausgewählt ist; das Ketonlösungsmittel aus der Gruppe bestehend aus Aceton, Butanon, Methylaceton, 2-Pentanon, 3-Pentanon, 3-Methylbutanon ausgewählt ist; das Alkohollösungsmittel aus der Gruppe bestehend aus Methanol, Alkohol, Propylalkohol, Isopropanol, Butanol, Isobutanol, sec-Butylalkohol, tert-Butanol, Pentanol, 2-Methyl-1-butanol, Isopentylalkohol, sec-Amylalkohol, 3-Pentanol, tert-Amylalkohol, 3-Methyl-2-butanol, Neopentylalkohol ausgewählt ist.

8. Festbett-Entfärbungsverfahren gemäß Anspruch 1 wobei das Gewicht des auflösenden Lösungsmittels in der Lösung der mehrfach ungesättigten Fettsäure 0,1- bis 10-mal so groß wie das Gewicht des Zulaufs der mehrfach ungesättigten Fettsäure ist.

9. Festbett-Entfärbungsverfahren gemäß einem der Ansprüche 1 bis 8, wobei der Füllstoff des Entfärbungsfestbetts wiederholt verwendet werden kann, wobei das Entfärbungsfestbett nach einer schlechter werdenden Entfärbung oder beendeten Entfärbung gespült werden kann und dann wiederholt verwendet wird.

10. Festbett-Entfärbungsverfahren gemäß einem der Ansprüche 1 bis 8, wobei der Füllstoff des Festbetts wiederholt verwendet werden kann, wobei das Entfärbungsfestbett nach einer schlechter werdenden Entfärbung oder beendeten Entfärbung mit einem Spüllösungsmittel gespült werden kann und dann wiederholt verwendet wird.

11. Festbett-Entfärbungsverfahren gemäß Anspruch 10, wobei das Spüllösungsmittel Wasser und das auflösenden Lösungsmittel ist.

## Revendications

1. Procédé de décoloration en lit fixe d'un acide gras polyinsaturé, le procédé de décoloration en lit fixe comprenant :
1) le transfert d'une matière de remplissage pour lit fixe dans un lit fixe pour décoloration et le rinçage du lit fixe pour décoloration avec un solvant de dissolution ; puis le rinçage 1∼2 fois du lit fixe pour décoloration avec une charge d'alimentation en un acide gras polyinsaturé ou une solution d'un acide gras polyinsaturé pour obtenir un lit fixe pour décoloration stable ; où la solution de l'acide gras polyinsaturé inclut la charge d'alimentation en l'acide gras polyinsaturé et le solvant de dissolution ;
2) le mélange de la charge d'alimentation en l'acide gras polyinsaturé ou de la solution de l'acide gras polyinsaturé avec le solvant de dissolution pour obtenir un mélange ; et
3) le passage du mélange au travers d'un dispositif d'entrée du lit fixe pour décoloration pour effectuer l'alimentation, le passage du mélange au travers d'un dispositif de sortie du lit fixe pour décoloration pour effectuer la décharge, une température du lit fixe pour décoloration étant de 0°C∼150°C, pour obtenir une solution décolorée ; puis le recyclage du solvant à partir de la solution décolorée sous pression réduite ou sous pression normale pour obtenir un produit qui est un acide gras polyinsaturé décoloré ;
où la charge d'alimentation en l'acide gras polyinsaturé est sélectionnée dans le groupe consistant en les types suivants : acide gras polyinsaturé libre, ester méthylique d'un acide gras polyinsaturé, ester éthylique d'un acide gras polyinsaturé et glycéride d'un acide gras insaturé ;
la matière de remplissage pour lit fixe est sélectionnée dans le groupe consistant en la carclazyte et un gel de silice ;
le solvant de dissolution est sélectionné dans le groupe consistant en un solvant ester, un solvant alcool et un solvant cétone.

2. Procédé de décoloration en lit fixe selon la revendication 1, où l'acide gras polyinsaturé est sélectionné dans le groupe consistant en une huile de poisson, une huile d'algue, l'acide linoléique, un acide linoléique conjugué, l'acide linolénique et l'acide arachidonique.

3. Procédé de décoloration en lit fixe selon la revendication 2, où la teneur totale en l'acide gras polyinsaturé dans la charge d'alimentation en l'acide gras polyinsaturé est de 10∼100% en poids.

4. Procédé de décoloration en lit fixe selon la revendication 1, où le gel de silice est sélectionné dans le groupe consistant en un gel de silice macroporeux, le Silochrome, un gel de silice de type B et un gel de silice poreux.

5. Procédé de décoloration en lit fixe selon la revendication 1, où la procédure d'introduction de la charge d'alimentation en l'acide gras polyinsaturé dans le lit fixe pour décoloration inclut une alimentation au niveau supérieur, une alimentation au niveau moyen et une alimentation au niveau inférieur ; et la procédure de décharge de la charge d'alimentation en l'acide gras polyinsaturé du lit fixe pour décoloration inclut une décharge au niveau supérieur, une décharge au niveau moyen et une décharge au niveau inférieur.

6. Procédé de décoloration en lit fixe selon la revendication 5, où un rapport entre le diamètre et la hauteur du lit fixe pour décoloration est de 1:1 ∼ 1:20.

7. Procédé de décoloration en lit fixe selon la revendication 1, où le solvant ester est sélectionné dans le groupe consistant en les suivants : formiate de méthyle, formiate d'éthyle, formiate de propyle, formiate d'isopropyle, formiate de butyle, formiate d'isobutyle, formiate d'amyle, formiate d'isoamyle, acétate de méthyle, acétate d'éthyle, acétate de propyle, acétate de butyle, acétate d'isobutyle, acétate d'amyle, acétate d'isoamyle, propionate de méthyle, propionate d'éthyle, propionate de propyle, propionate de butyle, propionate d'isobutyle, propionate d'amyle, propionate d'isoamyle, butyrate de méthyle, butyrate d'éthyle, butyrate de propyle, butyrate de butyle, butyrate d'isobutyle, butyrate d'amyle, butyrate d'isoamyle, isobutyrate de méthyle, isobutyrate d'éthyle, isobutyrate de propyle, isobutyrate de butyle, isobutyrate d'isobutyle, isobutyrate d'amyle, isobutyrate d'isoamyle, valérate de méthyle, valérate d'éthyle, valérate de propyle, valérate de butyle, valérate d'isobutyle, valérate d'amyle, valérate d'isoamyle, isovalérate de méthyle, isovalérate d'éthyle, isovalérate de propyle, isovalérate de butyle, isovalérate d'isobutyle, isovalérate d'amyle, isovalérate d'isoamyle ; le solvant cétone est sélectionné dans le groupe consistant en les suivants : acétone, butanone, acétone méthylique, 2-pentanone, 3-pentanone, 3-méthylbutanone ; le solvant alcool est sélectionné dans le groupe consistant en les suivants : méthanol, alcool, alcool propylique, isopropanol, butanol, isobutanol, alcool sec-butylique, butanol tertiaire, pentanol, 2-méthyl-1-butanol, alcool isopentylique, alcool sec-amylique, 3-pentanol, alcool tert-amylique, 3-méthyl-2-butanol, alcool néopentylique.

8. Procédé de décoloration en lit fixe selon la revendication 1, où le poids du solvant de dissolution dans la solution de l'acide gras polyinsaturé est 0,1∼10 fois plus élevé que le poids de la charge d'alimentation en l'acide gras polyinsaturé.

9. Procédé de décoloration en lit fixe selon l'une quelconque des revendications 1-8, où la matière de remplissage du lit fixe pour décoloration peut être employée à plusieurs reprises ; le lit fixe pour décoloration peut être rincé et ensuite réutilisé à plusieurs reprises après que la décoloration détériore ou stoppe.

10. Procédé de décoloration en lit fixe selon l'une quelconque des revendications 1-8, où le lit fixe pour décoloration peut être employé à plusieurs reprises ; après que la décoloration détériore ou stoppe, le lit fixe pour décoloration peut être rincé avec un solvant de rinçage puis réutilisé à plusieurs reprises.

11. Procédé de décoloration en lit fixe selon la revendication 10, où le solvant de rinçage est l'eau et le solvant de dissolution.
